# EUROPEAN PATENT APPLICATION

(11) **EP 0 939 516 A2**
(43) Date of publication of application: **01.09.1999**
(21) Application number: 99660008.6
(22) Date of filing: 19.01.1999
(51) Int. Cl.: H04L 12/26, H04L 29/06, G06F 11/34, G06F 17/30

(54) **User communication and monitoring system for computer networks**

(30) Priority: 19.01.1998 FI 980096
(71) Applicant: Robinson, Michael, Kingston on Thames, Surrey KT2 5JA (GB); Pekkola, Samuli, 40100 Jyväskylä (FI)
(72) Inventor: Robinson, Michael, Kingston on Thames, Surrey KT2 5JA (GB); Pekkola, Samuli, 40100 Jyväskylä (FI)
(74) Representative: Helke, Kimmo Kalervo

(57) **Abstract**

The present invention relates to user communication and monitoring system (UCMS) for computer networks, where a user connects her client computer through networks to the host computer chosen by her and an information connection is formed, which has following features:
- the host computer has information as files and software for uploading a requested file to network ,
- the client computer has software for requesting the file from the host computer and downloading and generating at least one screen or page for browsing from the downloaded file,
- client and host computers has support for so called applet software, where a downloaded file can embedded by an applet program, which is launched by certain user actions on the browser, especially actions on the browsed page, and which applet program is able to communicate with the host computer and to send starting information as well as periodic pulses so called heartbeats, and the host is adapted to record this information.

## Description

This invention relates to a user communication and monitoring system for computer networks (UCMS) like the Internet.

In a computerized information network like the Internet a user connects her client computer through networks to the host computer chosen by her and an information connection is formed, which has following features:
- the host computer has information as files and software for uploading a requested file to the network,
- the client computer has software for requesting the file from the host computer and downloading and generating at least one screen (or page) for browsing from the downloaded file,
- the client and host computers have support for so called applet software (applet software is defined as a program that does not need a permanent storage medium like disk or tape, although it may be so stored), where a downloaded file contains an embedded applet program, which is launched by certain user actions on the client software, especially actions of downloading or actions on the downloaded screen or page, and which applet program is able to communicate with the host computer.

In general, a page means a file, which has been downloaded from the server. In this document, when the term page is used to mean a user location and/or source for communication, it means any user location or set of locations. Even if not stated explicitly on each occasion, the term "page" includes and/or implies e.g. "a set of pages", "a server" or "servers".

Current World Wide Web (WWW) Technology is able to detect the arrival of visitors ("hits") on a WWW site or page. This information is often used on the page itself (e.g. "Welcome. You are visitor number 489,234 to this page"). It is also used as one measure of the "success" of a page.

Excluding the following WO-document there is, at the time of writing, no way of directly and continuously monitoring the continuing presence of a visitor on a page, or when a visitor leaves a page voluntarily (e.g. by changing pages, leaving the program, or disconnecting from the network) or involuntarily (e.g. because of a machine or network crash). This information is needed to make real-time communication between users on the same page possible, and for subsequent measurement of visit durations. An *indirect* way of achieving this result (used to terminate the transmission of information to a visitor who has left) is by requiring visitors to install a "plug in" before they can access the page. Once the "plug-in" is installed on the client machine by the user, the "plug-in" provides "leaving" information to the server. There is currently no *direct* way of achieving this result without actions to install special software on the client machine by the user.

PCT-publication WO 98/43380 introduces a direct method to measure visit duration by applet calculations on the client machine. This invention does not support ongoing information as to a user(s)' presence, does not support information on a user leaving involuntarily or by termination of the connection, and does not support or make possible any real-time communication between the users.

The object of the invention is to provide a user communication and monitoring system for Computer Networks (UCMS) and software that performs this function. Another object of the invention is to provide a system for generating ongoing real-time user information (e.g. who is on the same page (including as already noted same set of pages or server(s)) at the same time) that is not vulnerable to interrupted communication (machine crashes, network breakdowns, etc.).

The UCMS introduces a direct method to measure visit duration by applet (or similar) pulses ("heartbeats") on the client machine. The UCMS does support ongoing information as to a user(s)' presence, does support information on a user leaving involuntarily or by termination of the connection, and does support and make possible various modes of real-time communication between users. As noted, these features are supported by a pulse, **which is herein called** "a heartbeat". This provides ongoing information on one or more users presence to the host, from which awareness of other users within the same page or same set of pages or server(s) can be generated, thus supporting the opening of communication in any medium between any users of whom the server (or linked server) is aware.

The heartbeat information (and its cessation) received by the server can further be used to make an accurate calculation (external to and independent of the client) of the client leaving time and of visit duration. In summary, the heartbeat provides information to the server of visit duration, of leaving time, of which users are really on-line, and this can support awareness by each user about which others are in the same 'place', and can hence support the opening of communication in any medium between these users.

In the following, the invention is illustrated by reference to the accompanying figures, which show the UCMS mechanism.

Figure 1 shows an UCMS operative model.

Figure 2 shows a model of an UCMS client software e.g. applet.

Figure 3 shows a model of an UCMS server.

Figure 4 shows the procedure of establishing connections between clients.

Figure 5 shows the case where the communication occurs through the server.

Figure 6 shows the case where clients communicate without passing messages through the server.

UCMS is generic software with multiple uses, some of which are indicated in this paragraph. Currently there is no way to detect whether there are other users in the same page or in the same set of pages. Many IRC (Internet Relay Chat) programs provide a place for chatting in WWW by importing IRC-programs from the Internet. However, those systems provide information about other users in the same communication specific location, but do not provide any information from other users if they are not in a communication specific location, or in the same server, so it is impossible to establish any communication channel generally with or between users in the same or linked pages or set of pages or server(s).

In addition, current WWW monitoring software only supports knowledge of "hits". It does not support knowledge of how long any visitors stay on a page. It does not support calculation by the host of aggregate statistical information or profiles on page usage such as mean or median length of stay, standard deviation of length of stay, shape of length of stay curve, etc. It does not support passing information to other users or managers about who is "on" a page at any given time. UCMS generates information and enables knowledge on arrival and departure time of visitors, and thus of duration of visit. This can be used by the host to generate: log files of arrival & departure times, and of length of stay for each visitor; aggregate statistical profiles of visit durations; and information on who is "on" a WWW page at any given time that can in turn have many further uses. Individual and aggregate visit duration information is potentially more valuable and accurate in monitoring the "success" of WWW sites, and in redesigning layout and marketing strategy. Information on who (e.g. which client) is "on" a given page at a given time can be used to: provide managers with information about who is currently on a page, and hence the ability to open communication with users if desired; provide users with information on who else is on the same page, and hence the ability to open communication with them if desired. The former use (supporting vertical communication) is an obvious commercial application of UCMS.

It is anticipated that UCMS, when released, will be widely adopted, as there is currently no lightweight software available that supports mutual awareness by users, allows real-time communication between the users and/or generates WWW (or other Internet information base) duration of visit information, and that does not require installation on the client machine (e.g. plug-ins).

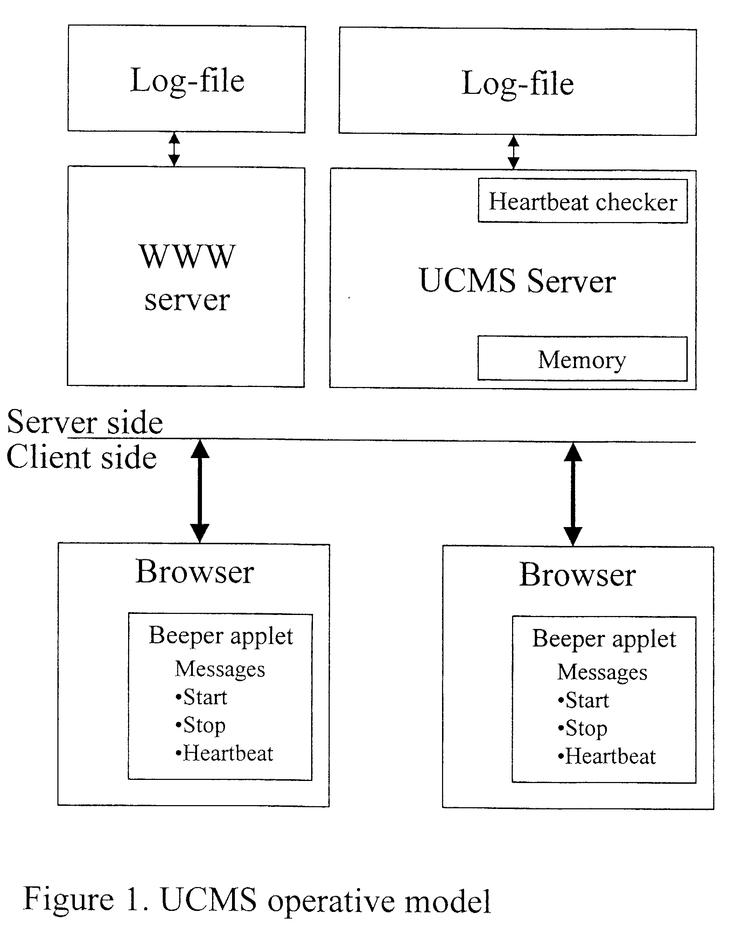

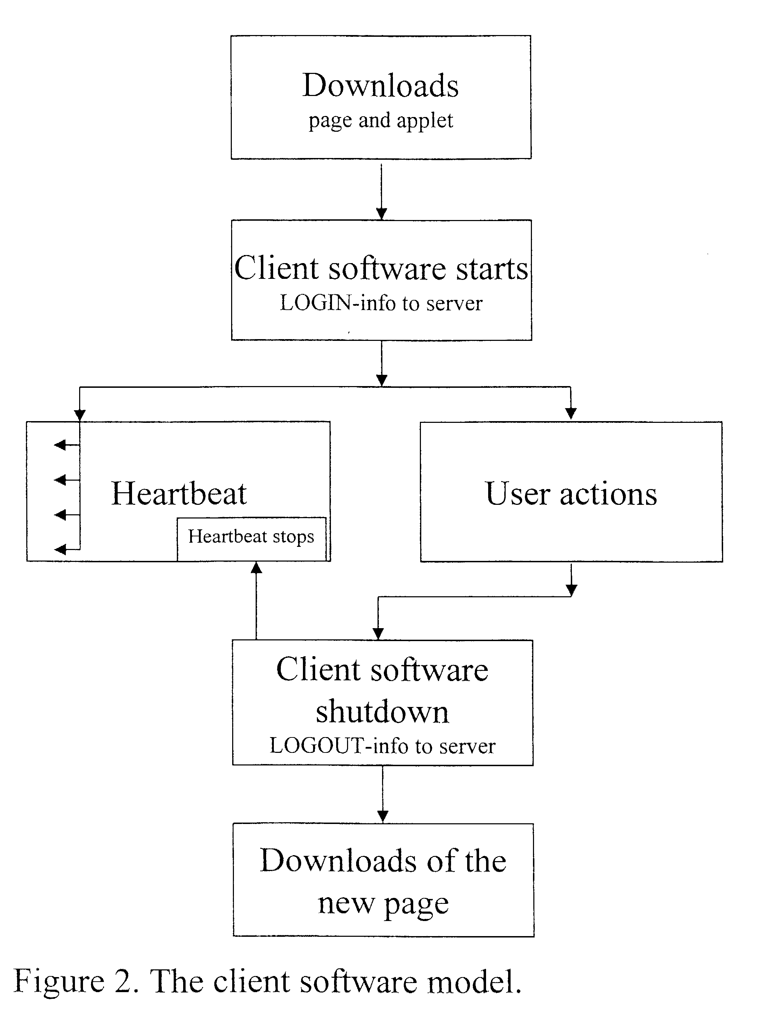

The basic mechanism of the UCMS is illustrated in Figure 1, and a more precise description follows Figure 2. When a user arrives on a web page, the download process is launched. Together with the page, she receives a small Java applet which is able to communicate with the server side UCMS program. The messages the client sends are the starting and closing times of the applet, and regular pulse messages (heartbeat) to indicate that the user is on-line and able to communicate (from technical point of view) with other users if necessary. Whenever the server receives a starting or closing message, or fails to receive a heartbeat, it updates a log-file.

Heartbeat rate is kept in the server's memory for faster reaction to any demand for communication. The log-file consists minimally of information about the login and logout times of *any* web page (with identifier and page-indicator) to which the applet has been added. This file can be used for many different purposes, e.g. real time monitoring of users or collecting long-term statistics or for security reasons.

Figure 2 illustrates the sequence of operations when the UCMS applet is started. At first ("Download"-stage) the user types an URL-address and starts to download the page information to her own client computer. With the HTML (Hyper-Text Modeling Language) code, she receives a client software (called an applet, which is e.g. programmed in Java) which is able to communicate with the server side program. Once the download is completed, the applet starts ("Client software starts"-stage) and informs the server of its existence. With this information, the UCMS server is able to write the LOGIN-time and any other available information from the client machine to the log-file. Minimally, with the time information, the server saves some kind of identifier and page-indicator.

After the page is completely downloaded and the applet is running, there will be a period (long or short) of user actions ("User actions"-stage). She can read, view, or do whatsoever she is able and willing to do with the information on the page. In parallel to this, the applet regularly sends pulse message to the server ("Heartbeat"-stage). In the case of user disconnection, of network crashes, or other problems, this could cause the cessation of heartbeat signals to the server side. The server reacts to cessation of heartbeat pulses by assuming that the client is not on-line anymore, so it updates the log-file and refuses all connection attempts to that client. In the case that the user changes the page or shuts down the applet (i.e. the stop or destroy methods of the applet are called) ("Client software shutdown"-stage), LOGOUT information is send to the server. This process is similar to the process of "Applet start"-stage, i.e. the applet transmits a notification message of shutdown to the UCMS-server, which then updates the log-file and writes the logout time with similar information on identifier and page-indicator.

Before the new web page is downloaded ("Download of the new page"-stage), the applet is deleted from the client. It is unnecessary for user to delete any files or applications from her computer. If the new page that the user enters also includes the applet, it is downloaded and played in the same way as described above. In general, the applet is installed and operates (i.e. sends information to UCMS) automatically, but it is activated and terminated entirely by the user actions.

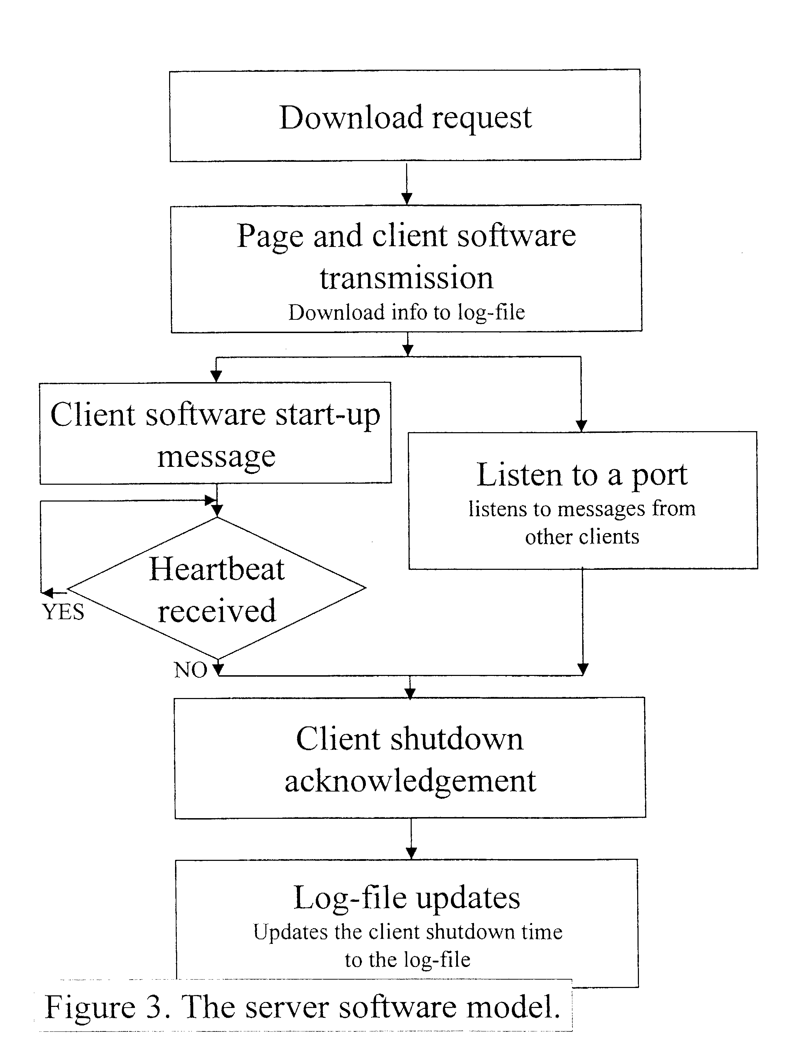

The operational model of the UCMS server is very similar to the UCMS client software model. Figure 3 illustrates the principles of such a model. At first ("Download request"-stage) the download request is received from the client. The server starts the page information transmission ("page and applet transmission"-stage). Together with the page (HTML-information), the applet is transmitted. When the download request has been received, the WWW-server software updates an ordinary log-file (this log-file update is a standard procedure, so it is not explained). However, this original log-file can now be used as a comparison file to calculate the real number of visitors, (since all browsers do not currently support Java, such visitors will be missed by the UCMS mechanism).

To return to the main flow, when the page information and applet have been transmitted, the server shifts to the port listening stage ("listen to a port"-stage) with a previously set port. Once a start-up message from the client is received, the server updates both the log-file by writing the LOGIN-time to the file and its' own memory for possible demands for real-time communication. Then the server keeps listening the port (actually the server listens to port all the time, all other procedures are being completed by the WWW-server itself). In parallel to listening to the port, the server checks that it receives the heartbeat message regularly from the client. After a while, when the user changes the page she is viewing and sends a logout message, or if the heartbeat pulse from the client is absent for a few cycles in a row, the server shifts to the "Client software acknowledgement-stage. In this stage, the server writes LOGOUT-time to the log-file and removes the user from its' database, so no attempts to communicate are accepted. Then the server continues monitoring other visitors (or the original visitor on a new page).

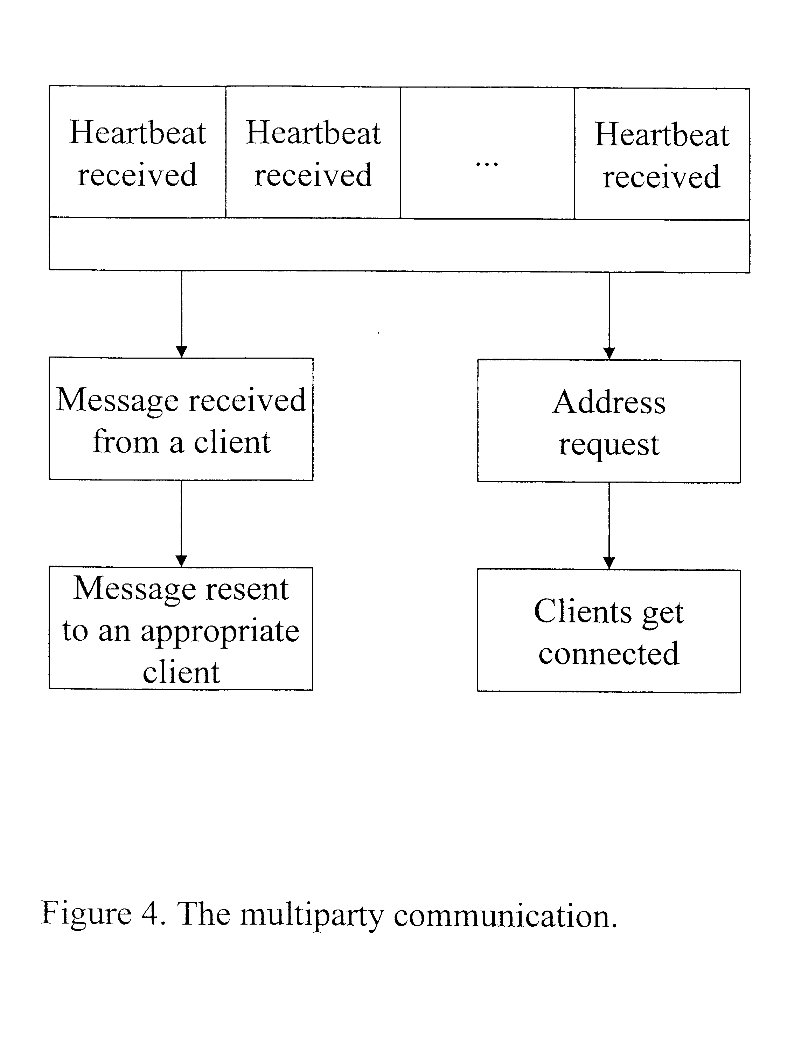

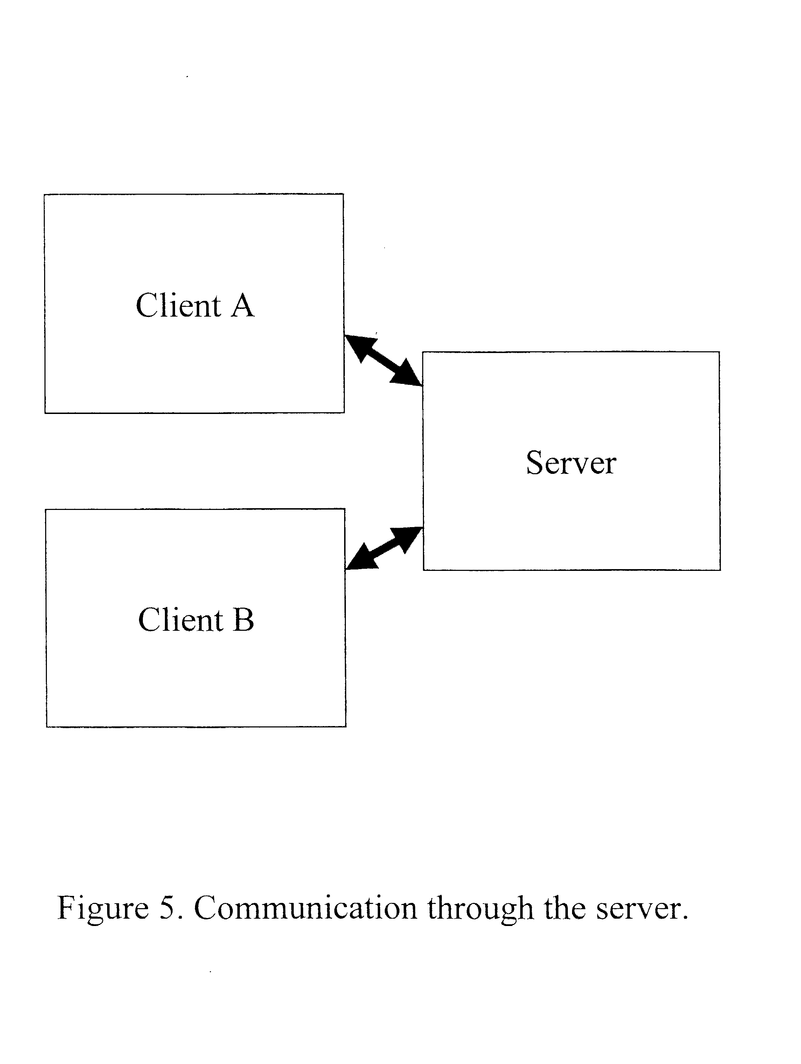

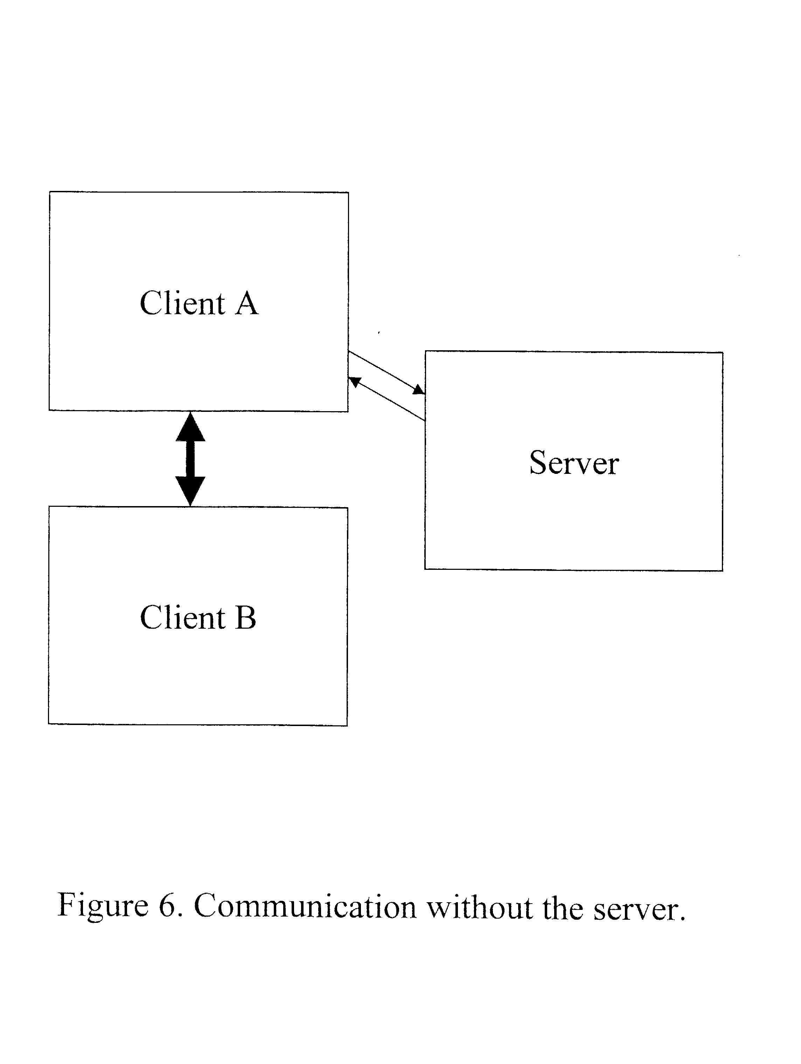

Figure 4 illustrates the possibilities for human communication. Several clients are connected to the server (the clients could be either in the same page or in different pages or on different servers). If communication through the server is wanted (from the management point of view, or to keep the client software simpler), a client sends a message to the server ("Message received from a client"-stage, see also figure 5). The message indicating required message type (e.g. text-message, audio or video stream etc.) includes an address-tag, so the server simply passes it to the appropriate client. On the other hand, if a client wants to communicate directly without using the server as a gateway, the client requests an address of the recipient from the server ("Address request"-stage, see also figure 6), which then replies and sends the address. Therefore the client can establish a communication channel directly to the appropriate client. The latter approach can be used when two clients want to communicate, while the former one is more appropriate for multiparty communication.

To take into account cases when the client computer or network crashes, or the user terminates the connection, and for other reasons, the applet in the client updates its existence at intervals e.g. of 1 second (generally in the range 0,001 - 5 min). The lower part of the range will be proper in the future e.g. in the asynchronous transfer mode (ATM). The interval must be relatively short in order to provide accurate information on which to base communication with or between users. For example, in a direct video or audio communication the interval range is preferably 0,001 - 1 sec, while in a indirect communication it is preferably 1 sec - 5 min.

The data directly from the applet, or indirectly from the log-file can be used for many different purposes as noted earlier. By comparing the UCMS log-file to the type of log-file currently generated by web browser, it is possible to calculate the number of users incapable of running applets (i.e. those on whom UCMS has no information). By the use of this comparison, it is possible to calibrate the statistical information from UCMS more precisely. With time, the proportion of clients that cannot receive applets (or be similarly enabled) can be expected to decrease greatly.

Especially, when Java is used, the file, which presents a downloadable page, includes one or more text variables for the applet on the page for use in system administration e.g. by a web master. There are the following useful variables:
- heartbeat intervals for real-time communication and robustness of server side information,
- page identification for starting and closing information,
- port number for communication between the applet in the client and the host program,
- image file for displaying on the page with the applet
- the applet provider's URL i.e. the address of the UCMS-server.

Because the Java binary code is universal, all client and server dependent variables such as heartbeat rate, page identifier and port number should be included on a WWW-page, not in the binary distribution. Therefore the same Java applet can be used with all pages each page containing unique identification variables.

An image file and URL above are optional.

A Java applet according the invention contains at least initialization, starting, heartbeat, stopping and destroying routines. The login code locates in the starting section and the logout code in the stopping section, respectively. The original Java software may be replaced by Microsoft Java or other Java version, or even by some other software written for similar kind of purposes as original Java developed by Sun Microsystems.

One of the uses of UCMS is as a communication channel. For example, in electronic commerce (EC) applications, a on-line customer could ask questions in real-time of the vendor or producer while she is shopping in an electronic market place; or vice versa, the vendor may offer online help for the customer. Currently there are no such possibilities in EC applications. The communication possibility can also be used in many other situations and applications in which human-human interaction is needed.

One of the uses of the log-file is as a real time user monitor, i.e. to find out who is looking at a particular page at the given moment. UCMS is designed to generate real time information on a web page if necessary. Information display formats for UCMS real time user information (who is on the same page at the same time) are being developed in both 2D and 3D. The display formats take into account the need for scalability, since the number of users on some commercial pages may be very high.

For example, in the case of 3D presentation, UCMS is able to read the log-file and send the information to a client VRML browser, which changes the appearance of the world using the instructions it receives from the server. There should be an automatic generator, which creates the VRML file from the files located on a web server. The generator goes through the directories the administrator has specified, and reads the UCMS applet definitions from those pages. From this data, the generator is able to generate a 3D projection of web information. The Java code, which is later needed for the communication with the UCMS server, is added from another file. This process is completed each time when a new page with the UCMS applet is installed to provide accurate information about the server. The appearance of the world is a 3D model of a set of web pages or server(s) in which the online users (as detected by the UCMS) are represented individually or in aggregate as appropriate.

Log-files can also be used for monitoring users real-time in some 'groupware' software applications. E.g. with the BSCW system from GMD (German National Research Center for Information Technology) the users, who share a workspace, are known directly because of user identification and password protection. It is possible to combine UCMS and GMD-BSCW to create a new identification file. On addition to ordinary UCMS log-file, this new file includes real user identification, i.e. login and -out times and IP number as usual, and, in addition, real name user id. Supporting such combined information is which requires merging or linking these two applications, i.e. some modification either to the application itself or to the UCMS viewing program is needed. This topic is an application, not related to this specification.

Communication channels for audio, video, text messages, and document transfer for users on the same page can be created from the UCMS files in similar ways to those discussed above for VRML and GMD-BSCW.

Since the log-file, which is created by the UCMS server, is formatted differently to the history record output, conversion is needed before output. The original log-file consists only of data on login and logout times. The time for which the user actually viewed the page (or the time the applet was running) can be calculated from those numbers. This information can be easily shown on a 2D interface and/or used to create 3D worlds for the users and/or used as a basis for audio, video, text messaging, or document transfer (see above). The original log-file should remain unchanged by any statistics that are calculated, since it may be needed in the future.

### Generality

In the above text, the specific programming language Java, and the specific networking mechanism of the World Wide Web, including 'applet', have been used to exemplify and instantiate the UCMS server and client programs and operations. The UCMS client-server mechanisms are intended to be entirely general, and to operate in any networking/program environment that is similar in the relevant respects.

The Java programming language is disclosed in numerous books, e.g. Ken Arnold, James Gosling: The Java Programming Language; Addision-Wesley, 1996.

## Claims

1. User communication and monitoring system (UCMS) for computer networks, where a user connects her client computer through networks to the host computer chosen by her and an information connection is formed, which has following features:
- the host computer has information as files and software for uploading a requested file to network ,
- the client computer has software for requesting the file from the host computer and downloading and generating at least one screen or page for browsing from the downloaded file,
- client and host computers has support for so called applet software, where a downloaded file can embedded by an applet program, which is launched by certain user actions on the browser, especially actions on the browsed page, and which applet program is able to communicate with the host computer and to send starting information representing the starting time of the browsing of the page, and the host is adapted to record this information,
characterized in that the applet software is adapted also to send periodic information (so called heartbeats) to the host computer, which is adapted to keep record of these heartbeats representing the user being active in the page.

2. User communication and monitoring system according to claim 1, characterized in that the host computer creates a separate file from the recorded information presenting a real-time view of the users on a certain page.

3. User communication and monitoring system according to claim 1 or 2, where the applet software uses virtual ports for communication, characterized in that in each time that the page information and the applet have been transmitted to the client, the host shifts to the port listening stage with a previously set port and starts to check heartsbeats from the client in a predetermined rate.

4. User communication and monitoring system according to one of claims 1 - 3,
characterized in that the host computer counts the browsing time of the page according to the heartbeats received from the client.

5. User communication and monitoring system according to one of claims 1- 4,
characterized in that the applet software is adapted also to send closing information to the host computer representing the finishing time of the browsing of the page.

6. User communication and monitoring system according to one of claims 1 - 4,
characterized in that the network is Internet and the UCMS code, the applet and/or server side programs, are programmed in Java.

7. User communication and monitoring system according to claim 4 or 5,
characterized in that the file presenting a downloadable page contains one or more variables for the applet in the same file, which variables belong to the following group:
- page identification for starting and closing information,
- port number for communication between the applet in the client and the host program,
- heartbeat rate,
- image for displaying on the page with the applet,
- url i.e. the address of the UCMS-server.

8. User communication and monitoring system according to one of claims 1 - 7,
characterized in that the applet in the client updates its existence at intervals in the range 0,001 - 5 min.

9. User communication and monitoring system according to claim 8 for video or audio communication, characterized in that the updating interval is in the range 0,001 - 1 second.
